# EUROPÄISCHE PATENTSCHRIFT

(11) **EP 3 052 306 B1**
(45) Veröffentlichungstag und Bekanntmachung des Hinweises auf die Patenterteilung: **22.05.2019**
(21) Anmeldenummer: 14753087.7
(22) Anmeldetag: 21.08.2014
(51) Int. Cl.: B29C 70/86, B29C 45/14, B29C 70/20, B29C 70/46, B29C 70/52, F16S 3/08

(54) **FASERVERBUNDWERKSTOFFBAUTEIL UND VERFAHREN ZUR HERSTELLUNG EINES FASERVERBUNDWERKSTOFFBAUTEILS**
FIBRE COMPOSITE MATERIAL COMPONENT AND METHOD FOR PRODUCING A FIBRE COMPOSITE MATERIAL COMPONENT
ÉLÉMENT EN MATÉRIAU COMPOSITE RENFORCÉ PAR FIBRES ET PROCÉDÉ DE FABRICATION D'UN ÉLÉMENT EN MATÉRIAU COMPOSITE RENFORCÉ PAR FIBRES

(30) Priorität: 30.09.2013 DE 102013219820
(43) Veröffentlichungstag der Anmeldung: 10.08.2016
(73) Patentinhaber: Bayerische Motoren Werke Aktiengesellschaft, 80809 München (DE)
(72) Erfinder: HOGGER, Thomas, 83624 Otterfing (DE)
(86) Internationale Anmeldenummer: PCT/EP2014/067794
(87) Internationale Veröffentlichungsnummer: WO 2015/043845

(56) Entgegenhaltungen:
- EP-A1- 2 006 074
- EP-A2- 0 335 186
- WO-A2-2004/073948
- DE-A1-102010 049 563
- DE-A1-102011 011 577
- KR-A- 20120 079 575
- US-A1- 2002 153 084

## Beschreibung

Die vorliegende Erfindung betrifft ein Faserverbundwerkstoffbauteil und ein Verfahren zur Herstellung eines Faserverbundwerkstoffbauteils.

Aus dem Stand der Technik ist bekannt, dass man aus mit thermoplastischem Material vorgetränkte Faserbündel und/oder Gelege und/oder Gewebe flächig anordnet, um Bauteile aufzubauen. Auch ist bekannt, dass man einzelne Stellen von faserverstärktem Kunststoff mit thermoplastischem Material mit und ohne Fasern umspritzt. Diese Verfahren dienen dazu, Stellen mit höherer Belastung, insbesondere Stellen der Krafteinleitung zu verstärken und so die Stabilität des Bauteils zu erhöhen.

Zudem ist bekannt, Bauteile im Spritzguss herzustellen. Dabei wird eine Spritzgussform ein textiles Fasermaterial (wie zum Beispiel Gelege, Gewebe, Gestricke, Bündel oder dergleichen) eingelegt und anschließend mit thermoplastischem Material mit und ohne Fasern umspritzt. Aus den vorgenannten Verfahren werden Schalen oder Hohlbauteile mit geschlossener Fläche oder dergleichen hergestellt.

Die DE 10 2006 040 784 A1 offenbart beispielsweise ein Spritzgussverfahren für faserverstärkte Kraftfahrzeugteile aus faserverstärkten Thermoplasten durch Spritzguss.

Aus der EP 2 006 074 A1, die die Oberbegriffe der Ansprüche 1 und 8 offenbart, ist es bekannt, dass mehrere Faserteile, insbesondere Faserbündel und Faserlagen, in dreidimensionaler Weise angeordnet werden, sodass sie ein Faser-Halbzeug bilden, das vollständig aus Fasermaterial besteht.

Die WO 2004/073948 A2, die US 2002/0153084 A, die KR 20120079575 A, die DE 10 2011 011 577 A1, die EP 0 335 186 A2 sowie die DE 10 2010 049 563 A1 zeigen allesamt Faserverbundwerkstoffbauteile, die Faserbündel oder Fasermatten aufweisen, aus denen ein vollständig aus Fasermaterial bestehendes Faser-Halbzeug für das jeweilige Faserverbundwerkstoffbauteil geschaffen ist.

Die aus dem Stand der Technik bekannten Verfahren weisen jedoch den Nachteil auf, dass nur "2-D" Faseranordnungen der Endlosfasern vorgesehen werden. Zugleich bewegt man sich dabei im Grenzbereich der Leichtbaufähigkeit und im Grenzbereich dessen, was mit belastungsgerechter Faserlage erreichbar ist. Darüber hinaus wird ein hoher Materialeinsatz notwendig und es kann zu nicht unerheblichem Verschnitt kommen.

Wünschenswert wäre es daher, leichter, belastungsgerechter, mit weniger Materialeinsatz und weniger Verschnitt bauen zu können.

Es ist daher die Aufgabe der vorliegenden Erfindung, ein Faserverbundwerkstoffbauteil und ein Verfahren zur Herstellung eines Faserverbundwerkstoffbauteils der eingangs genannten Art in vorteilhafter Weise weiterzubilden, insbesondere dahingehend, dass leichter gebaut werden kann, belastungsgerechtere Faserlagen möglich sind, der Materialeinsatz verringert sowie auch der Verschnitt verringert werden kann.

Diese Aufgabe wird erfindungsgemäß gelöst durch ein Faserverbundwerkstoffbauteil mit den Merkmalen des Anspruchs 1. Danach ist vorgesehen, dass ein Faserverbundwerkstoffbauteil mit Faserbündeln und mit einer Matrix aus thermoplastischem und/oder duroplastischem Material bereitgestellt wird, wobei die Faserbündel derart angeordnet sind, dass sie ein Profil bilden, wobei zwischen den Faserbündeln Verstrebungsmittel angeordnet sind, wobei die Faserbündel zumindest an den äußeren Kanten des Profils des Faserverbundwerkstoffbauteils und die Verstrebungsmittel zwischen den Faserbündeln angeordnet sind, sodass sich eine fachwerkartige Profilstruktur ergibt.

Dadurch ergibt sich erfindungsgemäß der Vorteil, dass insgesamt leichter als aus dem Stand der Technik bekannt gebaut werden kann, darüber hinaus eine dreidimensionale Anordnung von Endlosfasern ermöglicht ist und eine belastungsgerechtere Faserlage bereitgestellt werden kann. Hierdurch wird weiter erreicht, dass vorteilhafterweise der Materialeinsatz verringert werden kann und es zu weniger Verschnitt kommt.

Ferner ist denkbar, dass wenigstens ein Faserbündel ein UD-Faserbündel umfassend mehrere unidirektional angeordnete Fasern ist.

UD-Faserbündel sind Bündel umfassend mehrere unidirektional angeordnete Fasern, d.h. beispielsweise auch Faserbündel, die auch keine Verdrehung der Fasern aufweisen. Die Fasern können beispielsweise Kohlefasern sein. Denkbar ist auch, dass die Fasern Glasfasern sind. Ebenso können aber grundsätzlich auch Fasern aus einem sonstigen geeigneten Werkstoff gewählt werden.

Des Weiteren kann vorgesehen sein, dass wenigstens ein Faserbündel ausschließlich aus unidirektional angeordneten Fasern in Richtung des Verlaufs der Faserbündel besteht. Die ermöglicht einen einfachen Aufbau des Faserverbundwerkstoffbauteils.

Darüber hinaus ist denkbar, dass wenigstens ein Faserbündel erste unidirektional angeordnete Fasern in Richtung des Verlaufs der Faserbündel und zweite unidirektional angeordnete Fasern, mit denen die ersten Fasern umflochten sind, aufweist. Hierdurch kann die Stabilität des Faserbündels verbessert werden.

Es ist möglich, dass zumindest ein Faserbündel an einer Kante des Profils des Faserverbundwerkstoffbauteils angeordnet ist und/oder wobei die Faserbündel und die Verstrebungsmittel ein räumliches Profil bilden.

Es ist denkbar, dass mindestens 3 Faserbündel vorgesehen sind und/oder dass die Faserbündel räumlich angeordnet werden.

Das Faserverbundverbundwerkstoffbauteil kann ein Karosseriebauteil oder dergleichen sein. Denkbar ist beispielsweise, dass das Faserbundwerkstoffbauteil ein Dachquerverbindungselement wie z.B. der Windlauf (d.h. die Dachquerverbindung im Bereich zwischen den beiden A-Säulen des Kraftfahrzeugs) eines Fahrzeugs ist.

Mittels der Faserbündel mit Endlosfasern können räumliche Anordnungen bereitgestellt werden. Durch die entsprechende Anordnung mit Verstrebungsmitteln können steife und stabile Profile bereitgestellt werden, so dass deutlich leichter gebaut werden kann. Folglich wird ein sehr hohes Leichtbaupotenzial bereitgestellt und ermöglicht. Darüber hinaus sind beliebige Profilgeometrien erzeugbar, was insbesondere bei Bauteilen mit hohem Freiformflächenanteil von Vorteil ist.

Des Weiteren ist möglich, dass die Fasern derart angeordnet sind, dass sie Biegespannungen und/oder Zugspannungen und/oder Druckspannungen aufnehmen bzw. aufnehmen können und/oder. Hierdurch ergibt sich der Vorteil, dass belastungsgerecht gebaut werden kann, wobei insbesondere Faserverbundwerkstoffbauteile bereitgestellt werden können, die derart gestaltet sind, dass sie für die an ihnen anliegenden Biegespannungen und/oder Zugspannungen und/oder Druckspannungen gemäß Auslegung belastungsgerecht ausgestaltet sind

Ferner ist denkbar, dass die Verstrebungsmittel derart angeordnet sind, dass sie Torsionskräfte und/oder Schubkräfte übertragen und/oder aufnehmen bzw. aufnehmen können. Hierdurch ergibt sich der Vorteil, dass die neben den Biegespannungen, Zugspannungen oder Druckspannungen auftretenden Torsionskräfte oder Schubkräfte nicht durch die Faserbündel, sondern durch die hierfür vorgesehenen Verstrebungsmittel aufgenommen werden können. Hierdurch wird insgesamt die Stabilität des Faserverbundwerkstoffbauteils erhöht, da für die jeweils auftretenden Belastungen eigene Elemente, nämlich für zum Beispiel Biegespannung und/oder Zugspannung und/oder Druckspannung die Faserbündel und für die Torsionskräfte und/oder Schubkräfte die Verstrebungsmittel vorgesehen sind. Hierdurch wird eine sehr stabile Struktur erreicht, wobei gleichzeitig jedoch das Gewicht nicht signifikant erhöht werden muss.

Außerdem ist möglich, dass zumindest ein Faserbündel zumindest einen freiliegenden Abschnitt aufweist, an dem keine Verstrebungsmittel angeordnet sind, wobei vorzugsweise vorgesehen ist, dass die Faserbündel in regelmäßigen oder unregelmäßigen Abständen freiliegende Abschnitte aufweisen und/oder dass der freiliegende Abschnitt zumindest teilweise gekrümmt oder gerade ist. Die freiliegenden Abschnitte erlauben es, die Faserbündel bei der Herstellung direkt im Werkzeug einzuspannen. Hierdurch wird verhindert, dass sich das Faserbündel beim Einspritzen des thermoplastischen und/oder duroplastischen Materials verschieben kann, was unerwünscht ist. Die Fertigungsgenauigkeit des Faserverbundwerkstoffbauteils wird hierdurch erhöht. Gleichzeitig wird auch Gewicht eingespart, weil weniger thermoplastisches und/oder duroplastisches Material eingesetzt wird bzw. nur die Masse an Material eingesetzt wird, die notwendig ist. Der Umstand, dass die Faserbündel in regelmäßigen oder unregelmäßigen Abständen freiliegende Abschnitte aufweisen, ist weiter deshalb vorteilhaft, weil hierdurch an diesen Punkten die Faserbündel gut im Werkzeug fixiert werden können.

Des Weiteren kann vorgesehen sein, dass die Verstrebungsmittel aus Streben und/oder Schubflächen gebildet sind, und/oder dass die Verstrebungsmittel durch Anspritzen von thermoplastischem und/oder duroplastischem Material oder durch Faserbündel gebildet sind. Hierdurch ergibt sich der Vorteil, dass leicht bauende Elemente, die zudem einfach erzeugt werden können, als Verstrebungsmittel eingesetzt werden können. Dies ist kostengünstig und erlaubt gleichzeitig eine leicht bauende Struktur. Das thermoplastische und/oder duroplastische Material kann auch faserverstärkt sein.

Denkbar ist weiter, dass die Faserbündel in Entformungsrichtung so versetzt angeordnet sind, dass sie ohne Schieber aus dem Spritzgusswerkzeug entfernbar sind. Dies erleichtert die Herstellung und führt darüber hinaus zu einer Verringerung der Herstellungszeiten, da die Entformung aus dem Spritzgusswerkzeug erleichtert ist. Durch den Wegfall des Schiebers werden erhebliche Kosteneinsparungen möglich, weil das erforderliche Werkzeug weniger komplex ist und kostengünstiger hergestellt werden kann.

Außerdem ist möglich, dass das Faserbündel mit geraden Bereichen und/oder gekrümmten Bereichen vorgesehen ist. Hierdurch ergibt sich der Vorteil, dass die Faserbündel somit einer beliebigen Kurve näherungsweise folgen können. Denkbar ist, dass die Bündel so gestaltet sind, dass sie aus geraden Bereichen und zum Beispiel kurzen gekrümmten Bereichen bestehen. In den kurzen gekrümmten Bereichen müssen die Faserbündel beispielsweise nicht umspritzt sein, damit sie im Werkzeug dort fixiert werden können. Dies erlaubt eine besonders einfache Herstellung des Profils. Außerdem wird die Herstellung vereinfacht, da in den gekrümmten Bereichen keine Umspritzung erforderlich ist. Außerdem ist es von Vorteil, dass durch eine derartige Bündelgestaltung aus geraden und gekrümmten Bereichen einer beliebigen Kurve näherungsweise gefolgt werden kann, da hierdurch im Wesentlichen jegliche Freiformfläche erzeugt werden kann.

Darüber hinaus betrifft die vorliegende Erfindung ein Verfahren zur Herstellung eines Faserverbundwerkstoffbauteils mit den Merkmalen des Anspruchs 8. Danach ist vorgesehen, dass bei einem Verfahren zur Herstellung eines Faserverbundwerkstoffbauteils mit Faserbündeln und mit einer Matrix aus thermoplastischem und/oder duroplastischem Material derart vorgegangen wird, dass die Faserbündel derart angeordnet werden, dass sie ein Profil bilden, wobei zwischen den Faserbündeln Verstrebungsmittel angeordnet werden, wobei die Faserbündel zumindest an den äußeren Kanten des Profils des Faserverbundwerkstoffbauteils und die Verstrebungsmittel zwischen den Faserbündeln angeordnet werden, sodass sich eine fachwerkartige Profilstruktur ergibt.

Dadurch ergibt sich erfindungsgemäß der Vorteil, dass insgesamt leichter als aus dem Stand der Technik bekannt gebaut werden kann, darüber hinaus eine dreidimensionale Anordnung von Endlosfasern ermöglicht ist und eine belastungsgerechtere Faserlage bereitgestellt werden kann. Hierdurch wird weiter erreicht, dass vorteilhafterweise der Materialeinsatz verringert werden kann und es zu weniger Verschnitt kommt.

Des Weiteren kann vorgesehen sein, dass die Faserbündel UD-Faserbündel umfassend mehrere unidirektional angeordnete Fasern sind.

UD-Faserbündel sind Bündel umfassend mehrere unidirektional angeordnete Fasern, d.h. beispielsweise auch Faserbündel, die auch keine Verdrehung der Fasern aufweisen. Die Fasern können beispielsweise Kohlefasern sein. Denkbar ist auch, dass die Fasern Glasfasern sind. Ebenso können aber grundsätzlich auch Fasern aus einem sonstigen geeigneten Werkstoff gewählt werden.

Des Weiteren kann vorgesehen sein, dass wenigstens ein Faserbündel ausschließlich aus unidirektional angeordneten Fasern in Richtung des Verlaufs der Faserbündel besteht. Die ermöglicht einen einfachen Aufbau des Faserverbundwerkstoffbauteils.

Darüber hinaus ist denkbar, dass wenigstens ein Faserbündel erste unidirektional angeordnete Fasern in Richtung des Verlaufs der Faserbündel und zweite unidirektional angeordnete Fasern, mit denen die ersten Fasern umflochten sind, aufweist. Hierdurch kann die Stabilität des Faserbündels verbessert werden.

Es ist denkbar, dass mindestens 3 Faserbündel vorgesehen sind und/oder dass die Faserbündel räumlich angeordnet werden.

Das Faserverbundverbundwerkstoffbauteil kann ein Karosseriebauteil oder dergleichen sein.

Mittels der Faserbündel mit Endlosfasern können räumliche Anordnungen bereitgestellt werden. Durch die entsprechende Anordnung mit Verstrebungsmitteln können steife und stabile Profile bereitgestellt werden, so dass deutlich leichter gebaut werden kann. Folglich wird ein sehr hohes Leichtbaupotenzial bereitgestellt und ermöglicht. Darüber hinaus sind beliebige Profilgeometrien erzeugbar, was insbesondere bei Bauteilen mit hohem Freiformflächenanteil von Vorteil ist.

Die vorstehend im Zusammenhang mit dem erfindungsgemäßen Faserverbundwerkstoffbauteil bzw. den möglichen Ausführungsbeispielen beschriebenen Merkmale und Vorteile können allein oder in Kombination ebenfalls bei dem erfindungsgemäßen Verfahren zur Herstellung eines Faserverbundwerkstoffbauteils oder den nachstehend beschriebenen möglichen Ausführungsbeispielen des Verfahrens vorgesehen sein.

Des Weiteren kann vorgesehen sein, dass zumindest ein Faserbündel an einer Kante des Profils des Faserverbundwerkstoffbauteils angeordnet ist oder wird und/oder wobei die Faserbündel und die Verstrebungsmittel ein räumliches Profil bilden.

Des Weiteren kann vorgesehen sein, dass die Fasern derart angeordnet sind oder werden, dass sie Biegespannungen und/oder Zugspannungen und/oder Druckspannungen aufnehmen bzw. aufnehmen können. Darüber hinaus kann vorgesehen sein, dass die Verstrebungsmittel derart angeordnet sind oder werden, dass sie Torsionskräfte und/oder Schubkräfte übertragen und/oder aufnehmen bzw. übertragen und/oder aufnehmen können. Dies erleichtert, wie vorstehend bereits beschrieben, eine belastungsgerechte Auslegung des Faserverbundwerkstoffbauteils und unterstützt das Bestreben, möglichst leicht zu bauen.

Außerdem ist möglich, dass zumindest ein Faserbündel zumindest einen freiliegenden Abschnitt aufweist, an dem keine Verstrebungsmittel angeordnet sind, wobei vorzugsweise vorgesehen ist, dass die Faserbündel in regelmäßigen oder unregelmäßigen Abständen freiliegende Abschnitte aufweisen und/oder dass der freiliegende Abschnitt zumindest teilweise gekrümmt oder gerade ist. Wie vorstehend bereits im Detail beschrieben, ergibt sich hierdurch der Vorteil, dass hierdurch im Wesentlichen jegliche Freiformfläche erzeugt werden kann. Ferner kann die Genauigkeit der Formgebung verbessert werden, weil die Faserbündel direkt im Werkzeug durch entsprechende Ausnehmungen im Werkzeug fixiert werden können, so dass ein Verrutschen der Faserbündel zuverlässig verhindert werden kann.

Ferner kann vorgesehen sein, dass die Faserbündel trocken eingesetzt werden. Hierdurch wird beispielsweise erreicht, dass das Einsetzen in das Werkzeug erleichtert werden kann. Auch sind Anwendungsfälle denkbar, in denen es nicht erwünscht ist, vorgetränkte Faserbündel einzusetzen.

Des Weiteren ist jedoch ebenso möglich, dass die Faserbündel vorgetränkt eingesetzt werden. Hierdurch kann beispielsweise eine Vorvernetzung und ein besserer Halt und Verbund mit dem umgebenden Material erreicht werden, sofern dies erforderlich ist.

Darüber hinaus ist denkbar, dass die Faserbündel in Entformungsrichtung so versetzt angeordnet werden, dass sie ohne Schieber im Spritzgusswerkzeug entformt werden können. Hierdurch wird die Werkzeugherstellung des Spritzgusswerkzeuges vereinfacht und kann wesentlich kostengünstiger realisiert werden.

Außerdem ist möglich, dass die Verstrebungsmittel aus Streben und/oder Schubflächen gebildet werden und/oder dass die Verstrebungsmittel durch Anspritzen von thermoplastischem und/oder duroplastischem Material oder durch Faserbündel gebildet werden. Hierdurch ergibt sich der Vorteil, dass leicht bauende Elemente, die zudem einfach erzeugt werden können, als Verstrebungsmittel eingesetzt werden können. Dies ist kostengünstig und erlaubt gleichzeitig eine leicht bauende Struktur.

Außerdem ist möglich, dass die Faserbündel mit geraden Bereichen und/oder gekrümmten Bereichen vorgesehen werden. Hierdurch ergibt sich der Vorteil, dass die Faserbündel somit einer beliebigen Kurve näherungsweise folgen können. Denkbar ist, dass die Bündel so gestaltet sind, dass sie aus geraden Bereichen und zum Beispiel kurzen gekrümmten Bereichen bestehen. In den kurzen gekrümmten Bereichen müssen die Faserbündel beispielsweise nicht umspritzt sein, damit sie im Werkzeug dort fixiert werden können. Dies erlaubt eine besonders einfache Herstellung des Profils. Außerdem wird die Herstellung vereinfacht, da in den gekrümmten Bereichen keine Umspritzung erforderlich ist. Außerdem ist es von Vorteil, dass durch eine derartige Bündelgestaltung aus geraden und gekrümmten Bereichen einer beliebigen Kurve näherungsweise gefolgt werden kann, da hierdurch im Wesentlichen jegliche Freiformfläche erzeugt werden kann.

Des Weiteren betrifft die vorliegende Offenbarung eine Verwendung von UD-Faserbündeln und Verstrebungsmitteln zur Herstellung von Faserverbundwerkstoffbauteilen. Danach ist vorgesehen, dass Faserbündel und Verstrebungsmittel zur Herstellung von Faserverbundwerkstoffbauteilen verwendet werden, wobei die Faserbündel zumindest an den äußeren Kanten des Profils des Faserverbundwerkstoffbauteils angeordnet sind und wobei zwischen den Faserbündeln Verstrebungsmittel angeordnet sind oder werden.

Es ist denkbar, dass mindestens 3 Faserbündel vorgesehen sind und/oder dass die Faserbündel räumlich angeordnet werden. Die Verstrebungsmittel können nicht faserverstärkt ausgeführt sein.

Weitere Merkmale und Vorteile der Erfindung, die in den Ansprüchen definiert ist, ergeben sich aus der nachfolgenden Beschreibung und aus den nachfolgenden Zeichnungen, auf die Bezug genommen wird. In den Zeichnungen zeigen:
- Figur 1 eine perspektivische Ansicht eines erfindungsgemäßen Faserverbundwerkstoffbauteils, hergestellt durch ein erfindungsgemäßes Verfahrer;
- Figur 2 eine Draufsicht auf das Werkzeug für die erfindungsgemäße Herstellung eines erfindungsgemäßen Faserverbundwerkstoffbauteils;
- Figur 3 eine Darstellung des Schnittes A-A aus Figur 2;
- Figur 4 eine Darstellung des Schnittes B-B aus Figur 2;
- Figur 5 eine perspektivische Darstellung des erfindungsgemäßen Faserverbundwerkstoffbauteils;
- Figur 6 eine weitere perspektivische Darstellung des erfindungsgemäßen Faserverbundwerkstoffbauteils; und
- Figur 7 eine weitere perspektivische Darstellung des erfindungsgemäßen Faserverbundwerkstoffbauteils.

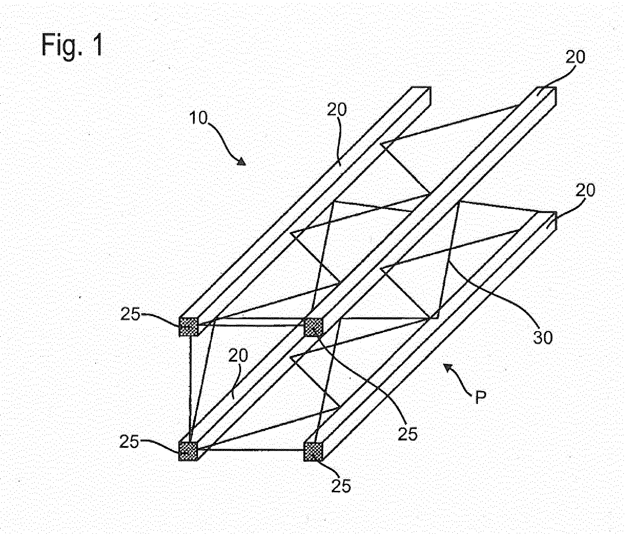

Figur 1 zeigt ein erfindungsgemäßes Faserverbundwerkstoffbauteil 10 ohne umgebendes Material, das durch ein Verfahren zur Herstellung des erfindungsgemäßen Faserverbundwerkstoffbauteils 10 erhalten wird.

Bei dem Herstellungsverfahren zur Herstellung des in Figur 1 gezeigten Faserverbundwerkstoffbauteils 10 werden hier zunächst Faserbündel 20 räumlich als Profil P angeordnet.

Das Profil P weist hier vier im Wesentlichen parallel angeordnete Faserbündel 20 mit Fasern 25 auf. Zwischen den Faserbündeln 20 sind mehrere Verstrebungsmittel 30 vorgesehen.

Mittels einer Matrix aus thermoplastischem und/oder duroplastischem Material werden die Faserbündel 20 und die Verstrebungsmittel 30 miteinander verbunden. Die Verstrebungsmittel 30 können dabei Bestandteil der Matrix sein.

Das fertige Faserverbundwerkstoffbauteil 10 weist somit Faserbündeln 20 und eine Matrix auf. Dabei sind die Faserbündel 20 derart angeordnet, dass sie ein Profil P bilden, wobei zwischen den Faserbündeln 20 Verstrebungsmittel 30 angeordnet sind.

Die Faserbündel 20 sind hier UD-Faserbündel, die mehrere unidirektional angeordnete Fasern 25 aufweisen.

Es ist möglich, dass die Faserbündel 20 ausschließlich aus unidirektional angeordnete Fasern in Richtung des Verlaufs der Faserbündel bestehen.

Alternativ ist aber auch denkbar, dass die Faserbündel 20 erste unidirektional angeordnete Fasern in Richtung des Verlaufs der Faserbündel 20 und zweite unidirektional angeordnete Fasern, mit denen die ersten Fasern umflochten sind, aufweisen.

In diesem Zusammenhang kann auch vorgesehen sein, dass wenigstens ein Faserbündel ausschließlich aus unidirektional angeordnete Fasern in Richtung des Verlaufs der Faserbündel besteht und wenigstens ein weiteres Faserbündel erste unidirektional angeordnete Fasern in Richtung des Verlaufs der Faserbündel 20 und zweite unidirektional angeordnete Fasern, mit denen die ersten Fasern umflochten sind, aufweist.

Die Faserbündel 20 sind dabei zumindest an den äußeren Kanten des Profils P des Faserverbundwerkstoffbauteils 10 angeordnet und zwischen den Faserbündeln 20 sind Verstrebungsmittel 30, z.B. Rippen und Schubflächen, vorgesehen und angeordnet, sodass sich eine fachwerkartige Profilstruktur ergibt. Sodann werden die Faserbündel 20 und die Verstrebungsmittel 30 mit thermoplastischem oder duroplastischem Material umspritzt bzw. die Verstrebungsmittel durch den Anspritzen an die Faserbündel 20 erzeugt.

Die Kräfte werden sodann durch die Fasern 25 übertragen, wobei das thermoplastische oder duroplastische Material die Verbindung zwischen den Faserbündeln 20 herstellt. Durch die räumliche Anordnung können Profile P mit hoher Steifigkeit und hoher Stabilität bei minimalem Gewicht hergestellt werden. Durch die freie Anordnung der Faserbündel 20 im Raum können beliebige Profilformen ermöglicht werden, die zum Beispiel für B-Säulen, Tragstrukturen, Scheibenrahmen usw. verwendet werden können.

Die Fasern 25 können derart angeordnet werden, dass sie Biegespannungen und/oder Zugspannungen und/oder Druckspannungen aufnehmen.

Die Verstrebungsmittel 30 werden derart angeordnet, dass sie Torsionskräfte und/oder Schubkräfte übertragen und/oder aufnehmen können.

Es ist denkbar, dass die Faserbündel 20 trocken eingesetzt werden. Denkbar ist aber auch, dass sie vorgetränkt eingesetzt werden können.

Die Verstrebungsmittel 30 können aus Streben oder Schubflächen gebildet sein und es ist weiter denkbar, dass die Verstrebungsmittel durch Anspritzen von thermoplastischem oder duroplastischem Material oder durch Faserbündel 20 gebildet werden.

Es ist denkbar, dass die Faserbündel 20 in Entformungsrichtung so versetzt angeordnet werden, dass sie ohne Schieber aus dem Spritzgusswerkzeug entfernt werden können.

Des Weiteren kann vorgesehen sein, dass die Faserbündel 20 so gestaltet sind, dass sie aus geraden Bereichen und kurzen gekrümmten Bereichen bestehen und so einer beliebigen Kurve näherungsweise folgen können.

Das erfindungsgemäße Verfahren bzw. das erfindungsgemäße Faserverbundwerkstoffbauteil erlauben es, räumliche Anordnungen der UD-Faserbündel 20 mit Endlosfasern 25 zu erreichen, die nahezu beliebige Formgebungen ermöglichen. Es können steife und stabile Profile P erreicht werden, die darüber hinaus deutlich leichter als vergleichbare, bekannte Profile sein können. Somit ist ein sehr hohes Leichtbaupotenzial möglich. Darüber hinaus sind beliebige Profilgeometrien oder beliebige Bauteilformgebungen erzeugbar und es wird ein geringerer Materialbedarf erreicht. Insbesondere ist weniger Verschnitt bzw. kein Verschnitt vorhanden.

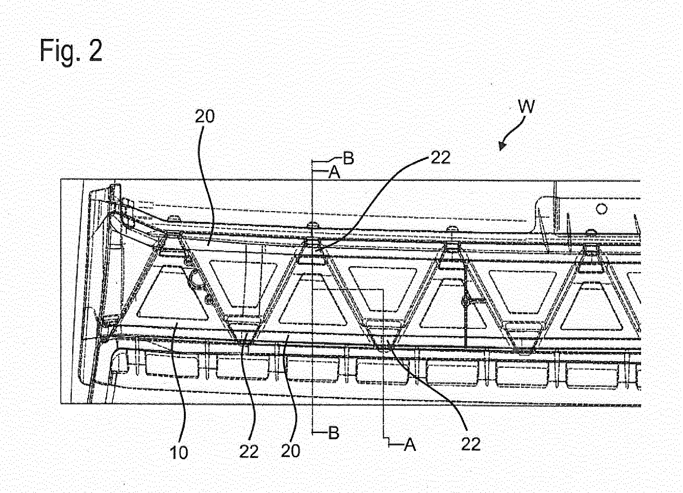

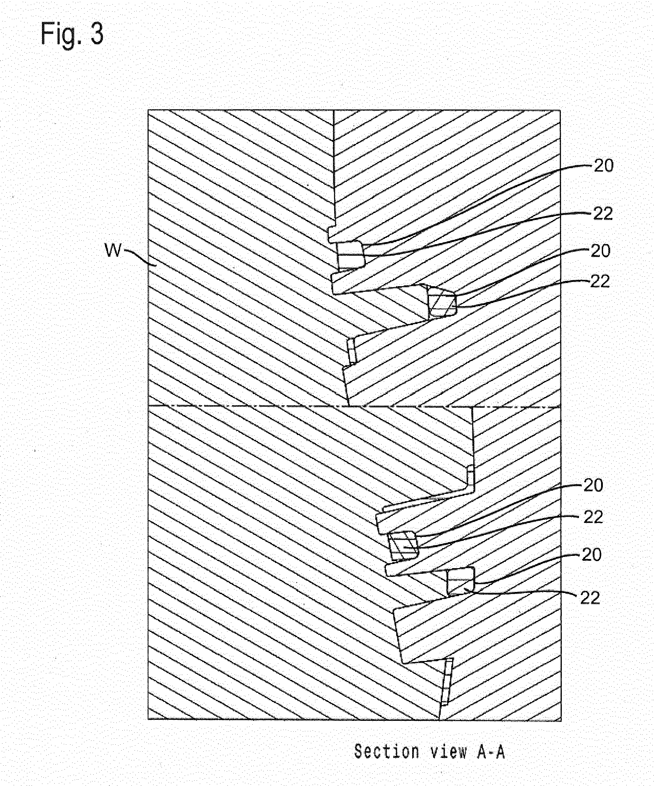

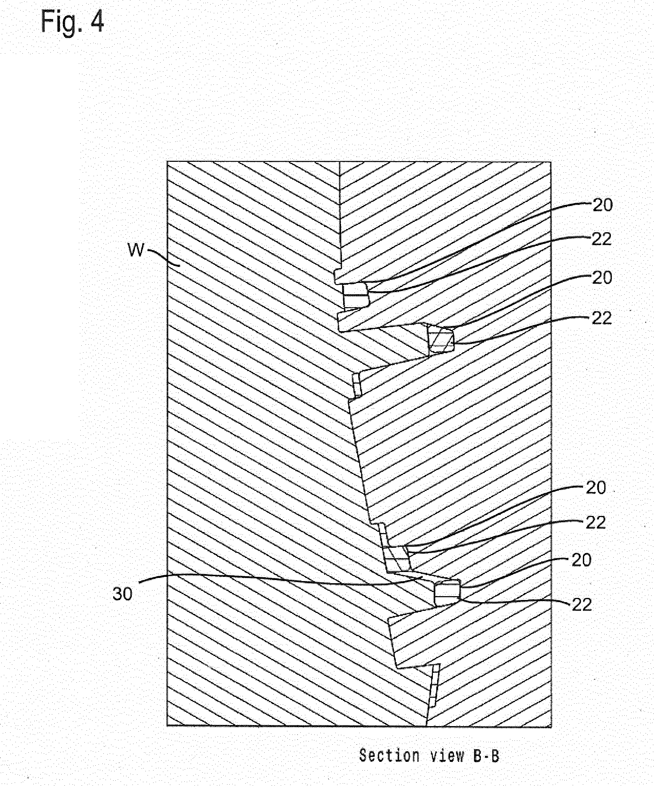

Figur 2 zeigt eine Draufsicht auf das Werkzeug W für die erfindungsgemäße Herstellung eines erfindungsgemäßen Faserverbundwerkstoffbauteils 10, hier ein Dachquerelement für ein Kraftfahrzeug, nämlich ein Windlauf. Figur 3 zeigt eine Darstellung des Schnittes A-A aus Figur 2 und Figur 4 zeigt eine Darstellung des Schnittes B-B aus Figur 2.

Das Faserverbundwerkstoffbauteil 10 gemäß Figur 2 weist sämtliche vorstehend im Zusammenhang mit Figur 1 gezeigten und beschriebenen Merkmale auf. Auch hier sind Faserbündel 20 räumlich als Profil P angeordnet und zwischen den Faserbündeln 20 sind Verstrebungsmittel 30 angeordnet, die die Faserbündel 20 miteinander verbinden. Die Faserbündel 20 können wie im Zusammenhang mit Figur 1 beschriebene UD-Faserbündel sein.

Wie aus den Figuren 2, 3 und 4 gut ersichtlich ist, sind in regelmäßigen Abständen freiliegende Abschnitte 22 vorgesehen, an denen keine Verstrebungsmittel 30 angeordnet sind. In diesen freiliegenden Abschnitten 22 sind die Faserbündel 20 dabei direkt im Werkzeug W eingelegt, wie dies insbesondere in Figur 3 und 4 gezeigt ist. Folglich sind die Faserbündel 20 beim Einspritzen von thermoplastischem oder duroplastischem Material an dieser Stelle im Werkzeug fixiert und bewegen sich nicht aus der Form. Eine hohe Formgenauigkeit ist daher möglich.

Die Faserbündel 20 können in regelmäßigen oder unregelmäßigen Abständen freiliegende Abschnitte 22 aufweisen. Grundsätzlich kann der freiliegende Abschnitt 22 zumindest teilweise gekrümmt oder gerade sein.

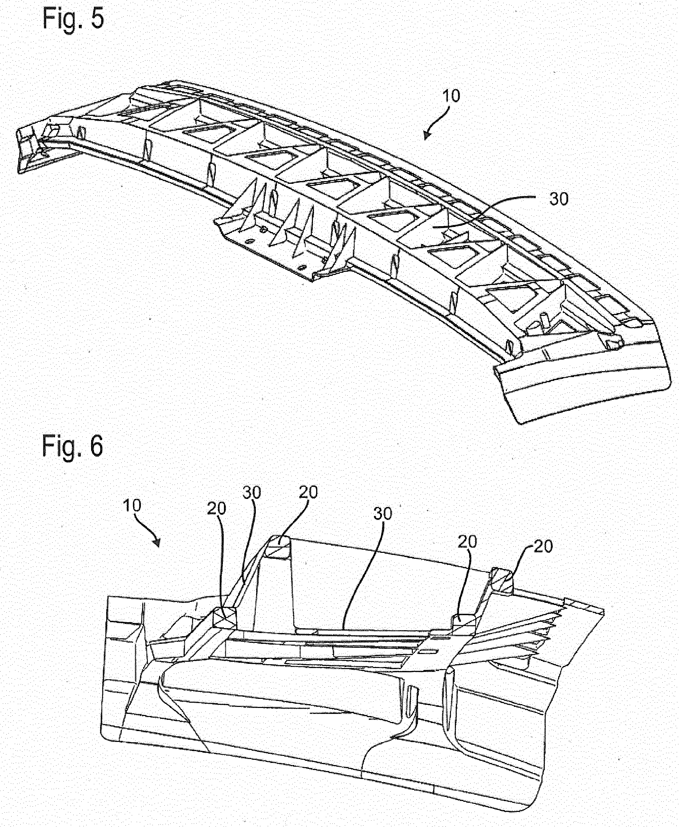

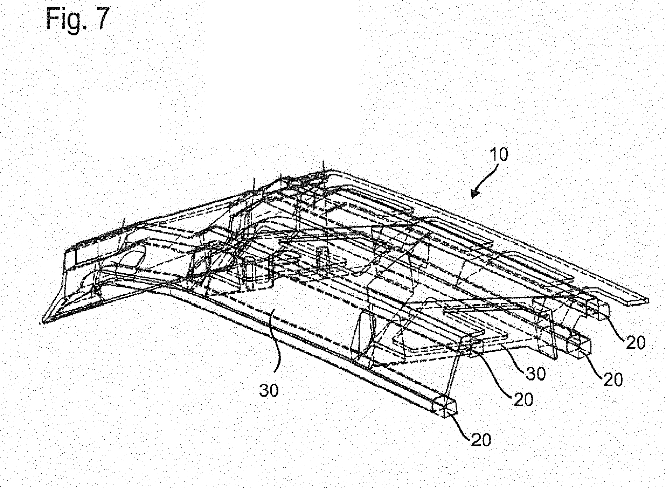

Figur 5 zeigt eine perspektivische Darstellung des erfindungsgemäßen Faserverbundwerkstoffbauteils 10 gemäß den Figuren 2 bis 4. In den Figuren 6 und 7 ist gebrochen das in Figur 5 gezeigte Faserverbundwerkstoffbauteils 10 gezeigt.

Die Faserbündel 20 sind dabei jeweils in den Kantenbereichen des Faserverbundwerkstoffbauteils 10 angeordnet. Hierdurch wird erreicht, die Fasern der Faserbündel 20 Biegespannungen und Zugspannungen und Druckspannungen aufnehmen können.

Die Verstrebungsmittel 30 sind demgegenüber derart angeordnet, dass sie Torsionskräfte und/oder Schubkräfte übertragen und/oder aufnehmen bzw. aufnehmen können.

## Patentansprüche

1. Faserverbundwerkstoffbauteil (10) mit Faserbündeln (20) und mit einer Matrix aus thermoplastischem und/oder duroplastischem Material, wobei die Faserbündel (20) derart angeordnet sind, dass sie ein Profil (P) bilden, wobei zwischen den Faserbündeln (20) Verstrebungsmittel (30) angeordnet sind, **dadurch gekennzeichnet, dass** die Faserbündel (20) zumindest an den äußeren Kanten des Profils (P) des Faserverbundwerkstoffbauteils (10) und die Verstrebungsmittel (30) zwischen den Faserbündeln (20) angeordnet sind, sodass sich eine fachwerkartige Profilstruktur ergibt.

2. Faserverbundwerkstoffbauteil (10) nach Anspruch 1, **dadurch gekennzeichnet, dass** wenigstens ein Faserbündel (20) ein UD-Faserbündel umfassend mehrere unidirektional angeordnete Fasern (25) ist.

3. Faserverbundwerkstoffbauteil (10) nach Anspruch 1 oder 2, **dadurch gekennzeichnet, dass** wenigstens ein Faserbündel (20) ausschließlich aus unidirektional angeordnete Fasern in Richtung des Verlaufs der Faserbündel besteht.

4. Faserverbundwerkstoffbauteil (10) nach einem der vorhergehenden Ansprüche, **dadurch gekennzeichnet, dass** wenigstens ein Faserbündel (20) erste unidirektional angeordnete Fasern in Richtung des Verlaufs der Faserbündel (20) und zweite unidirektional angeordnete Fasern, mit denen die ersten Fasern umflochten sind, aufweist.

5. Faserverbundwerkstoffbauteil (10) nach einem der vorhergehenden Ansprüche, **dadurch gekennzeichnet, dass** die Verstrebungsmittel (30) Rippen und/oder Schubflächen umfassen und/oder dass die Faserbündel (20) derart angeordnet sind, dass sie Biegespannungen und/oder Zugspannungen und/oder Druckspannungen aufnehmen können und/oder dass die Verstrebungsmittel (30) derart angeordnet sind, dass sie Torsionskräfte und/oder Schubkräfte übertragen und/oder aufnehmen können.

6. Faserverbundwerkstoffbauteil (10) nach einem der vorhergehenden Ansprüche, **dadurch gekennzeichnet, dass** zumindest ein Faserbündel (20) zumindest einen freiliegenden Abschnitt (22) aufweist, an dem keine Verstrebungsmittel (30) angeordnet sind.

7. Faserverbundwerkstoffbauteil (10) nach einem der vorhergehenden Ansprüche, **dadurch gekennzeichnet, dass** die Verstrebungsmittel (30) aus Streben und/oder Schubflächen gebildet sind, und/oder dass die Verstrebungsmittel (30) durch Anspritzen von thermoplastischem und/oder duroplastischem Material oder durch Faserbündel gebildet sind .

8. Verfahren zur Herstellung eines Faserverbundwerkstoffbauteils (10) mit Faserbündeln (20) und mit einer Matrix aus thermoplastischem und/oder duroplastischem Material, wobei Faserbündel (20) derart angeordnet werden, dass sie ein Profil (P) bilden, wobei zwischen den Faserbündeln (20) Verstrebungsmittel (30) angeordnet werden, **dadurch gekennzeichnet, dass** die Faserbündel (20) zumindest an den äußeren Kanten des Profils (P) des Faserverbundwerkstoffbauteils (10) und die Verstrebungsmittel (30) zwischen den Faserbündeln (20) angeordnet werden, sodass sich eine fachwerkartige Profilstruktur ergibt.

9. Verfahren nach Anspruch 8, **dadurch gekennzeichnet, dass** wenigstens ein Faserbündel (20) ein UD-Faserbündel umfassend mehrere unidirektional angeordnete Fasern (25) ist.

10. Verfahren nach Anspruch 8 oder 9, **dadurch gekennzeichnet, dass** wenigstens ein Faserbündel (20) ausschließlich aus unidirektional angeordneten Fasern in Richtung des Verlaufs der Faserbündel besteht.

11. Verfahren nach einem der Ansprüche 8 bis 10, **dadurch gekennzeichnet, dass** wenigstens ein Faserbündel (20) erste unidirektional angeordnete Fasern in Richtung des Verlaufs der Faserbündel (20) und zweite unidirektional angeordnete Fasern, mit denen die ersten Fasern umflochten sind, aufweist.

12. Verfahren nach einem der Ansprüche 8 bis 11, **dadurch gekennzeichnet, dass** die Faserbündel (20) derart angeordnet werden, dass sie Biegespannungen und/oder Zugspannungen und/oder Druckspannungen aufnehmen können und/oder dass die Verstrebungsmittel (30) derart angeordnet werden, dass sie Torsionskräfte und/oder Schubkräfte übertragen und/oder aufnehmen können.

13. Verfahren nach einem der Ansprüche 8 bis 12, **dadurch gekennzeichnet, dass** zumindest ein Faserbündel (20) zumindest einen freiliegenden Abschnitt (22) aufweist, an dem keine Verstrebungsmittel (30) angeordnet werden, und/oder dass die Faserbündel (20) in Entformungsrichtung so versetzt angeordnet werden, dass sie ohne Schieber aus dem Spritzgusswerkzeug entfernbar sind und/oder dass die Faserbündel (20) trocken oder vorgetränkt eingesetzt werden.

14. Verfahren nach einem der Ansprüche 8 bis 13, **dadurch gekennzeichnet, dass** die Verstrebungsmittel (30) aus Streben und/oder Schubflächen gebildet werden und/oder dass die Verstrebungsmittel (30) durch Anspritzen von thermoplastischem und/oder duroplastischem Material oder durch Faserbündel gebildet werden.

## Claims

1. A fibre composite material component (10) with fibre bundles (20) and with a matrix of thermoplastic and/or thermoset material, wherein the fibre bundles (20) are arranged such that they form a profile (P), wherein bracing means (30) are arranged between the fibre bundles (20), **characterised in that** the fibre bundles (20) are arranged at least on the outer edges of the profile (P) of the fibre composite material component (10) and the bracing means (30) are arranged between the fibre bundles (20), so that a latticework-like profile structure is produced.

2. A fibre composite material component (10) according to Claim 1, **characterised in that** at least one fibre bundle (20) is a unidirectional fibre bundle comprising a plurality of unidirectionally arranged fibres (25).

3. A fibre composite material component (10) according to Claim 1 or Claim 2, **characterised in that** at least one fibre bundle (20) consists exclusively of unidirectionally arranged fibres in the direction in which the fibre bundles run.

4. A fibre composite material component (10) according to one of the preceding claims, **characterised in that** at least one fibre bundle (20) has first unidirectionally arranged fibres in the direction in which the fibre bundles (20) run, and second unidirectionally arranged fibres with which the first fibres are entwisted.

5. A fibre composite material component (10) according to one of the preceding claims, **characterised in that** the bracing means (30) comprise ribs and/or thrust surfaces and/or **in that** the fibre bundles (20) are arranged such that they can absorb bending stresses and/or tensile stresses and/or compressive stresses and/or **in that** the bracing means (30) are arranged such that they can transmit and/or absorb torsional forces and/or shear forces.

6. A fibre composite material component (10) according to one of the preceding claims, **characterised in that** at least one fibre bundle (20) has at least one exposed portion (22) on which no bracing means (30) are arranged.

7. A fibre composite material component (10) according to one of the preceding claims, **characterised in that** the bracing means (30) are formed of struts and/or thrust surfaces, and/or **in that** the bracing means (30) are formed by injecting on thermoplastic and/or thermoset material or by fibre bundles .

8. A method for producing a fibre composite material component (10) with fibre bundles (20) and with a matrix of thermoplastic and/or thermoset material, wherein fibre bundles (20) are arranged such that they form a profile (P), wherein bracing means (30) are arranged between the fibre bundles (20), **characterised in that** the fibre bundles (20) are arranged at least on the outer edges of the profile (P) of the fibre composite material component (10) and the bracing means (30) are arranged between the fibre bundles (20), so that a latticework-like profile structure is produced.

9. A method according to Claim 8, **characterised in that** at least one fibre bundle (20) is a unidirectional fibre bundle comprising a plurality of unidirectionally arranged fibres (25).

10. A method according to Claim 8 or Claim 9, **characterised in that** at least one fibre bundle (20) consists exclusively of unidirectionally arranged fibres in the direction in which the fibre bundles run.

11. A method according to one of Claims 8 to 10, **characterised in that** at least one fibre bundle (20) has first unidirectionally arranged fibres in the direction in which the fibre bundles (20) run, and second unidirectionally arranged fibres with which the first fibres are entwisted.

12. A method according to one of Claims 8 to 11, **characterised in that** the fibre bundles (20) are arranged such that they can absorb bending stresses and/or tensile stresses and/or compressive stresses and/or **in that** the bracing means (30) are arranged such that they can transmit and/or absorb torsional forces and/or shear forces.

13. A method according to one of Claims 8 to 12, **characterised in that** at least one fibre bundle (20) has at least one exposed portion (22) on which no bracing means (30) are arranged and/or **in that** the fibre bundles (20) are arranged offset in the direction of demoulding such that they can be removed from the injection mould without a slider and/or **in that** the fibre bundles (20) are used dry or preimpregnated.

14. A method according to one of Claims 8 to 13, **characterised in that** the bracing means (30) are formed of struts and/or thrust surfaces, and/or **in that** the bracing means (30) are formed by injecting on thermoplastic and/or thermoset material or by fibre bundles.

## Revendications

1. Elément en matériau composite renforcé par des fibres (10) comprenant des faisceaux de fibres (20) et une matrice en un matériau thermoplastique et/ou thermodurcissable, les faisceaux de fibres (20) étant installés de façon à former un profilé (P), des moyens d'entretoisement (30) étant installés entre les faisceaux de fibres (20),
**caractérisé en ce que**
les faisceaux de fibres (20) sont installés au moins sur les bords externes du profilé (P) de l'élément en matériau composite renforcé par des fibres (10), et les moyens d'entretoisement (30) sont installés entre les faisceaux de fibres (20) de façon à obtenir une structure profilée en forme de treillis.

2. Elément en matériau composite renforcé par des fibres (10) conforme à la revendication 1,
**caractérisé en ce qu'**
au moins un faisceau de fibres (20) est un faisceau de fibres unidirectionnelles UD comprenant plusieurs fibres à orientation unidirectionnelle (25).

3. Elément en matériau composite renforcé par des fibres (10) conforme à la revendication 1 ou 2,
**caractérisé en ce qu'**
au moins un faisceau de fibres (20) est exclusivement constitué par des fibres à orientation unidirectionnelle en direction de l'extension du faisceau de fibres.

4. Elément en matériau composite renforcé par des fibres (10) conforme à l'une des revendications précédentes,
**caractérisé en ce qu'**
au moins un faisceau de fibres (20) comporte des premières fibres à orientation unidirectionnelle en direction de l'extension du faisceau de fibres (20) et des secondes fibres à orientation unidirectionnelle avec lesquelles les premières fibres sont tressées.

5. Elément en matériau composite renforcé par des fibres (10) conforme à l'une des revendications précédentes,
**caractérisé en ce que**
les moyens d'entretoisement (30) comportent des nervures et/ou des surfaces de poussée et/ou les faisceaux de fibres (20) sont installés de façon à pouvoir absorber des contraintes de flexion et/ou des contraintes de traction et /ou des contraintes de tension, et/ou les moyens d'entretoisement (30) sont installés de façon à pouvoir transmettre et/ou absorber des forces de torsion et/ou des forces de poussée.

6. Elément en matériau composite renforcé par des fibres (10) conforme à l'une des revendications précédentes,
**caractérisé en ce qu'**
au moins un faisceau de fibres (20) comporte au moins un segment dégagé (22) sur lequel n'est installé aucun moyen d'entretoisement (30).

7. Elément en matériau composite renforcé par des fibres (10) conforme à l'une des revendications précédentes,
**caractérisé en ce que**
les moyens d'entretoisement (30) sont formés par des entretoises et/ou des surfaces de poussée et/ou les moyens d'entretoisement (30) sont formés par moulage par injection de matériau thermoplastique et/ou thermodurcissable ou par des faisceaux de fibres.

8. Procédé d'obtention d'un élément en matériau composite renforcé par des fibres (10) comprenant des faisceaux de fibres (20) et une matrice en un matériau thermoplastique et/ou thermodurcissable, les faisceaux de fibres (20) étant installés de façon à former un profilé (P), et des moyens d'entretoisement (30) étant installés entre les faisceaux de fibres (20),
**caractérisé en ce que**
les faisceaux de fibres (20) sont installés au moins sur les bords externes du profilé (P) de l'élément en matériau composite enforcé par des fibres (10), et les moyens d'entretoisement (30) sont installés entre les faisceaux de fibres (20) de façon à obtenir une structure profilée en forme de treillis.

9. Procédé conforme à la revendication 8,
**caractérisé en ce qu'**
au moins un faisceau de fibres (20) est un faisceau de fibres unidirectionnelles UD comprenant plusieurs fibres (25) à orientation unidirectionnelle.

10. Procédé conforme à la revendication 8 ou 9,
**caractérisé en ce qu'**
au moins un faisceau de fibres (20) est exclusivement constitué par des fibres à orientation unidirectionnelle en direction de l'extension du faisceau de fibres.

11. Procédé conforme à l'une des revendications 8 à 10,
**caractérisé en ce qu'**
au moins un faisceau de fibres (20) comporte des premières fibres à orientation unidirectionnelle en direction de l'extension du faisceau de fibres (20) et des secondes fibres à orientation unidirectionnelle avec lesquelles les premières fibres sont tressées.

12. Procédé conforme à l'une des revendications 8 à 11,
**caractérisé en ce que**
les faisceaux de fibres (20) sont installés de façon à pouvoir absorber des contraintes de flexion et/ou des contraintes de traction et/ou des contraintes de pression et/ou les moyens d'entretoisement (30) sont installés de sorte qu'ils puissent transmettre et/ou absorber des forces de torsion et/ou des forces de poussée.

13. Procédé conforme à l'une des revendications 8 à 12,
**caractérisé en ce qu'**
au moins un faisceau de fibres (20) comporte au moins un segment dégagé (22) sur lequel n'est installé aucun moyen entretoisement (30), et/ou les faisceaux de fibres (20) sont décalés dans la direction de démoulage de sorte qu'ils puissent être libérés de l'outil d'injection sans poussoir et/ou les faisceaux de fibres (20) sont utilisés sec ou auparavant imprégnés.

14. Procédé conforme à l'une des revendications 8 à 13,
**caractérisé en ce que**
les moyens d'entretoisement (30) sont formés par des entretoises et/ou des surfaces de poussée et/ou les moyens d'entretoisement (30) sont formés par injection de matériau thermoplastique et/ou de matériau thermodurcissable ou par des faisceaux de fibres.
